# EUROPEAN PATENT SPECIFICATION

(11) **EP 3 338 118 B1**
(45) Date of publication and mention of the grant of the patent: **02.08.2023**
(21) Application number: 16760794.4
(22) Date of filing: 17.08.2016
(51) Int. Cl.: G02B 6/38, G02B 6/25

(54) **AUTOMATIC FIBER CLEANING SYSTEM AND METHOD**
SYSTEM UND VERFAHREN ZUR AUTOMATISCHEN FASERREINIGUNG
SYSTÈME ET PROCÉDÉ DE NETTOYAGE AUTOMATIQUE DE FIBRES

(30) Priority: 17.08.2015 CN 201510503975
(43) Date of publication of application: 27.06.2018
(73) Proprietor: Tyco Electronics (Shanghai) Co. Ltd., Shanghai 200131 (CN); TE Connectivity Corporation, Berwyn, PA 19312 (US); Shenzhen AMI Technology Co. Ltd, Shenzhen Guangdong 518108 (CN)
(72) Inventor: XIE, Fengchu, Shanghai (CN); ZENG, Qinglong, Shenzhen Guangdong 518108 (CN); ZHANG, Yu, Shanghai (CN); ZHANG, Dandan, Shanghai (CN); HU, Lvhai, Shanghai (CN); LU, Roberto Francisco-Yi, Berwyn, Pennsylvania 19312 (US)
(74) Representative: Grünecker Patent- und Rechtsanwälte PartG mbB
(86) International application number: PCT/IB2016/054923
(87) International publication number: WO 2017/029617

(56) References cited:
- EP-A1- 2 209 026
- JP-A- H07 287 124
- JP-B2- 2 599 425
- US-A- 5 469 611
- US-B1- 6 505 372

## Description

Embodiments of the present invention relate to an automatic fiber cleaning system and a method for automatic fiber cleaning.

A fiber optic connector generally comprises a housing and a ferrule assembly assembled in the housing. The ferrule assembly comprises a ferrule and optical fibers inserted into bores of the ferrule. An existing method of manufacturing the ferrule assembly typically comprises: firstly, stripping off a length of an outer coating layer of an optical cable so as to expose the length of bare fiber; secondly, cleaning the exposed bare fiber so as to remove residues on the fiber, for example, residues of the outer coating layer; thirdly, inserting the cleaned bare fiber into the bores of the ferrule; finally, heating and curing an adhesive in the ferrule so as to secure the fiber in the ferrule. As a result, the ferrule assembly is completely manufactured.

In the prior art, the bare fiber is generally cleaned manually. The manual cleaning method has a low efficiency, and it is easy to damage the bare fiber during cleaning the bare fiber, thereby reducing an optical performance of the bare fiber.

JP H07 287 124 A relates to a device and method for automatically cleaning an optical fiber.

US 5 469 611 A relates to a tip processing method for jacketed optical fibers. A tip processing apparatus is equipped with a holder and a holder holding unit for extending the tip of the jacketed optical fiber comprising at least one optical fiber provided with a jacket, the holder holding the jacketed optical fiber in place.

JP 2599425 B2 relates to a wiping device for an optical fiber.

It is therefore the object of the present invention to provide an improved automatic fiber cleaning system, and a corresponding method for using an automatic fiber cleaning system.

This object is solved by an automatic fiber cleaning system according to independent claim 1 and an automatic fiber cleaning method according to independent claim 11.

Further preferred embodiments are defined by the dependent claims.

The present invention aims to solve at least one aspect of the above issues and disadvantages in the prior art.

An objective of the present invention is to provide an automatic fiber cleaning system, which cleans optical fibers automatically, and optical fibers are not apt to be damaged during cleaning the optical fibers so that an optical performance of the optical fibers may be ensured.

By using the automatic fiber cleaning system, the bare fiber is allowed to be cleaned automatically, so that an efficiency for cleaning the bare fiber may be increased, and optical fibers are not apt to be damaged during cleaning the optical fibers, so that an optical performance of the optical fibers may be ensured.

Other objectives and advantages of the present invention will become more apparent by describing the present disclosure with reference to the following accompanying drawings, and this description may also aid to give a complete comprehension of the present disclosure.

### BRIEF DESCRIPTION OF THE DRAWINGS

The above and other features of the present invention will become more apparent by describing in detail exemplary embodiments thereof with reference to the accompanying drawings, in which:
Fig.1 is a schematic perspective view of a multi-bore ferrule, not forming part of the claimed invention;
Fig.2 is a schematic perspective view of a ribbon cable, not forming part of the claimed invention;
Fig.3 is a schematic perspective view of an automatic fiber cleaning system according to the claimed invention; and
Fig.4 is a schematic perspective view of a fiber carrying mechanism of an automatic fiber cleaning system according to the claimed invention.

### DETAILED DESCRIPTION OF PREFERRED EMBODIMENTS OF THE IVENTION

The technical solutions of the present invention will be further explained specifically in the following embodiments in combination with accompanying drawings. The same or similar reference numbers indicate the same or similar parts in the specification. The following explanation of the embodiments with reference to the drawings intends to explain the general inventive concept of the present invention, but cannot be interpreted as a limitation to the present invention.

Moreover, in the following detailed description, for the purpose of explanation, a number of specific details are explained in order to provide a complete comprehension to the disclosed embodiments. However, it is obvious that one or more embodiments may be implemented without these specific details. In other cases, well known structures and devices are embodied in a form of illustration to simplify the drawings.

According to a general technical concept of the present invention, it is provided an automatic fiber cleaning system comprising a first cleaning module, a second cleaning module and a sprayer. The first cleaning module comprises: a first cleaning belt; a first driven belt wheel on which an unused portion of the first cleaning belt is wound; a first driving belt wheel on which a used portion of the first cleaning belt is wound; and a first pressing tool on which the first cleaning belt is tightened. The second cleaning module comprises: a second cleaning belt; a second driven belt wheel on which an unused portion of the second cleaning belt is wound; a second driving belt wheel on which a used portion of the second cleaning belt is wound; and a second pressing tool on which the second cleaning belt is tightened. The sprayer is configured to spray a cleaning agent onto the first cleaning belt and the second cleaning belt tightened on the first pressing tool and the second pressing tool. The first pressing tool and the second pressing tool are cooperated with each other to press the first cleaning belt and the second cleaning belt on both sides of an optical fiber to be cleaned, respectively, so that the optical fiber to be cleaned is clamped between the first cleaning belt and the second cleaning belt. The first cleaning belt and the second cleaning belt are driven to move relative to the optical fiber by the first driving belt wheel and the second driving belt wheel, so as to wipe the optical fiber.

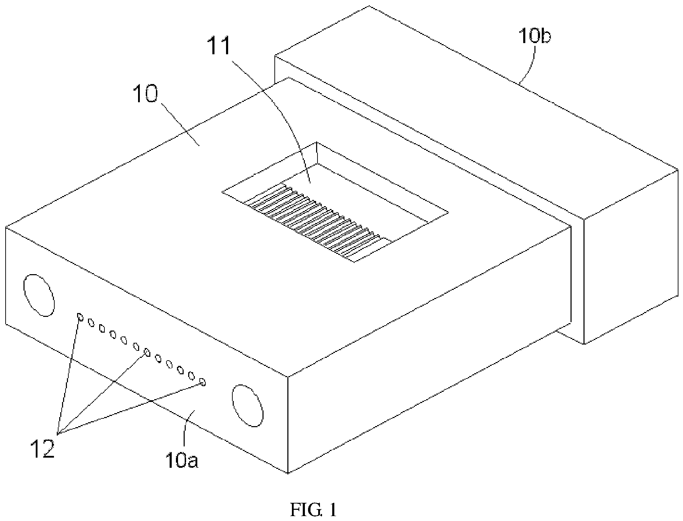

Fig.1 is a schematic perspective view of a multi-bore ferrule 10 according to an embodiment, not forming part of the claimed invention.

As shown in Fig. 1, the multi-bore ferrule 10 has a plurality of bores 12 extending longitudinally along the multi-bore ferrule 10 and an injection opening 11 formed on a top of the multi-bore ferrule 10.

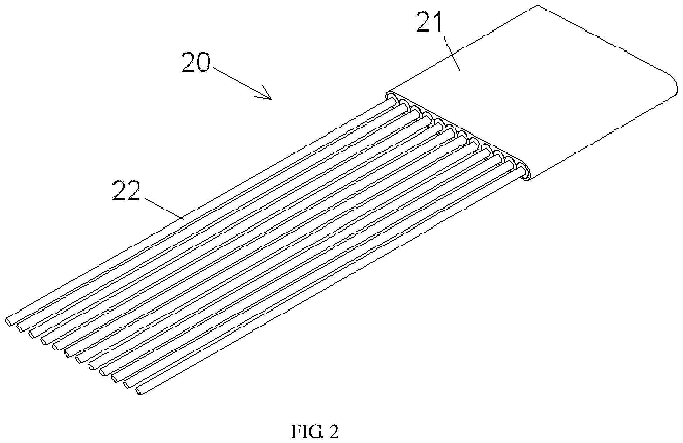

Fig.2 is a schematic perspective view of a ribbon cable 20 according to an embodiment, not forming part of the claimed invention.

As shown in Fig.2, the ribbon cable 20 has a plurality of optical fibers 22 and an outer coating layer 21 covering the optical fibers 22. A length of the outer coating layer 21 is stripped off so as to expose a length of the optical fibers 22.

As shown in Figs.1 and 2, the ferrule assembly to be manufactured comprises the multi-bore ferrule 10 as shown in Fig.1 and the optical fibers 22 inserted and secured into the bores 12 of the multi-bore ferrule 10.

In the embodiment, the optical fibers 22 are inserted from an insertion port at a rear end 10b of the multi-bore ferrule 10 and protrude by a predefined distance from a front end 10a of the multi-bore ferrule 10.

In the embodiment, surfaces of the optical fibers 22 are required to be cleaned before the optical fibers 22 are inserted into the bores 12 of the multi-bore ferrule 10.

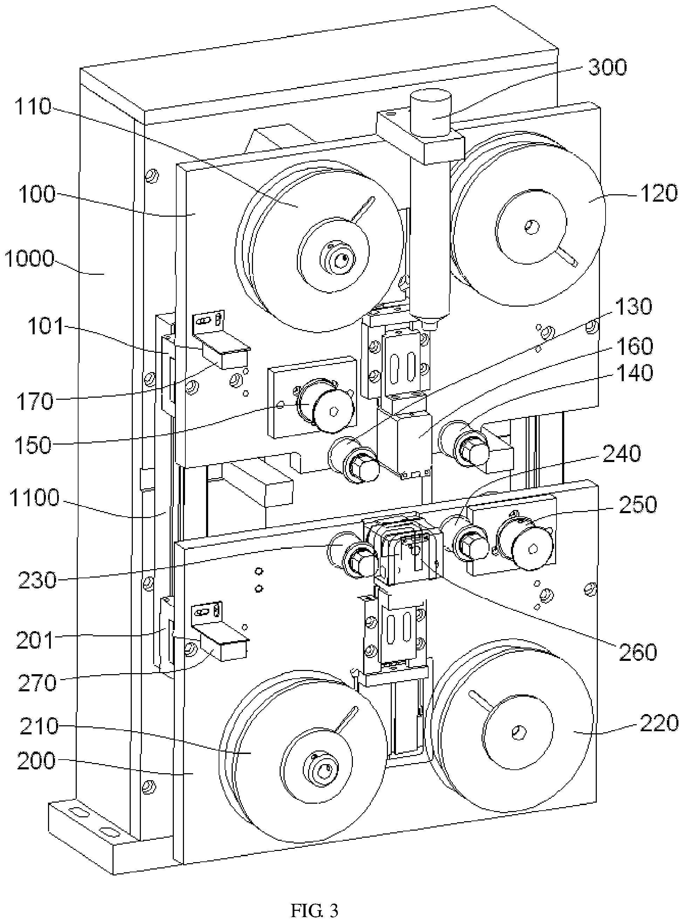

Fig.3 is a schematic perspective view of an automatic fiber cleaning system according to the claimed invention.

In this embodiment, an automatic fiber cleaning system is disclosed. As shown in Fig.3, the automatic fiber cleaning system mainly comprises a first cleaning module (also referred as an upper cleaning module), a second cleaning module (also referred as a lower cleaning module) and a sprayer 300.

As shown in Fig.3, the first cleaning module mainly comprises: a first cleaning belt (not shown); a first driven belt wheel 120, a first driving belt wheel 110 and a first pressing tool 160. An unused portion (i.e. a portion which has not been brought into contact with the optical fiber 22) of the first cleaning belt is wound on the first driven belt wheel 120. A used portion (i.e. a portion which has wiped the optical fiber 22) of the first cleaning belt is wound on the first driving belt wheel 110. Further, the first cleaning belt between the first driving belt wheel 110 and the first driven belt wheel 120 is tightened on the first pressing tool 160.

Similarly, as shown in Fig.3, the second cleaning module mainly comprises: a second cleaning belt (not shown); a second driven belt wheel 220, a second driving belt wheel 210 and a second pressing tool 260. An unused portion (i.e. a portion which has not been brought into contact with the optical fiber 22) of the second cleaning belt is wound on the second driven belt wheel 220. A used portion (i.e. a portion which has wiped the optical fiber 22) of the second cleaning belt is wound on the second driving belt wheel 210. Further, the second cleaning belt between the second driving belt wheel 210 and the second driven belt wheel 220 is tightened on the second pressing tool 260.

As shown in Fig.3, the sprayer 300 is configured to spray a cleaning agent onto the first cleaning belt and the second cleaning belt tightened on the first pressing tool 160 and the second pressing tool 260. In an exemplary embodiment, the cleaning agent may comprise alcohol.

As shown in Fig.3, the first pressing tool 160 and the second pressing tool 260 are adapted to cooperate with each other to press the first cleaning belt and the second cleaning belt against both sides of the optical fiber 22, respectively, so that the optical fiber 22 to be cleaned is clamped between the first cleaning belt and the second cleaning belt. In this way, while the first cleaning belt and the second cleaning belt are driven to move relative to the optical fiber 22 by the first driving belt wheel 110 and the second driving belt wheel 210, the first cleaning belt and the second cleaning belt may wipe surfaces of the optical fibers 22, so as to perform a cleaning operation on the optical fibers 22.

In an embodiment, as shown in Fig.3, the first cleaning module further comprises a first sensor 170 adapted to detect whether the first cleaning belt has been used out. Similarly, the second cleaning module further comprises a second sensor 270 adapted to detect whether the second cleaning belt has been used out. In the illustrated embodiment, the first sensor 170 and the second sensor 270 may comprise visual sensors.

In an embodiment, as shown in Fig.3, the first cleaning module further comprises a pair of first rollers 130, 140 which are located at two sides of the first pressing tool 160, respectively, and the first cleaning belt is tightened on the pair of first rollers 130, 140 and the first pressing tool 160. Similarly, the second cleaning module further comprises a pair of second rollers 230, 240 which are located at two sides of the second pressing tool 260, respectively, and the second cleaning belt 260 is tightened on the pair of second rollers 230, 240 and the second pressing tool 260.

In an embodiment, as shown in Fig.3, the first cleaning module further comprises a first tightening roller 150 adapted to adjust a tension of the first cleaning belt. For example, the tension of the first cleaning belt may be adjusted by fixing the first tightening roller 150 at different positions. Similarly, the second cleaning module further comprises a second tightening roller 250 adapted to adjust a tension of the second cleaning belt. For example, the tension of the second cleaning belt may be adjusted by fixing the second tightening roller 250 at different positions.

As shown in Fig.3, the first cleaning module is mounted on a first mounting plate 100 and the second cleaning module is mounted on a second mounting plate 200. In the illustrated embodiment, the first mounting plate 100 and the second mounting plate 200 are arranged to be movable relative to each other, so that the first pressing tool 160 and the second pressing tool 260 are movable relative to each other so as to loose or clamp the optical fiber 22.

In the illustrated embodiment as shown in Fig.3, the first mounting plate 100 and the second mounting plate 200 are movably mounted on the same vertical stationary baseplate 1000, and the first mounting plate 100 is located right above the second mounting plate 200.

In the illustrated embodiment as shown in Fig.3, a rail 1100 extending vertically is arranged on the stationary baseplate 1000. A first slider 101 is arranged on the first mounting plate 100 and slidably engaged with the rail 1100 so as to move upward and downward along the rail 1100. And a second slider 201 is arranged on the second mounting plate 200 and slidably engaged with the rail 1100 so as to move upward and downward along the rail 1100.

In an embodiment, as shown in Fig.3, the sprayer 300 is mounted on the first mounting plate 100.

Though not shown, in an embodiment, the automatic fiber cleaning system may further comprise a plate driving mechanism adapted to drive the first mounting plate 100 to move with respect to the stationary baseplate 1000, so as to allow the first pressing tool 160 mounted on the first mounting plate 100 to be movable relative to the second pressing tool 260 mounted on the second mounting plate 200.

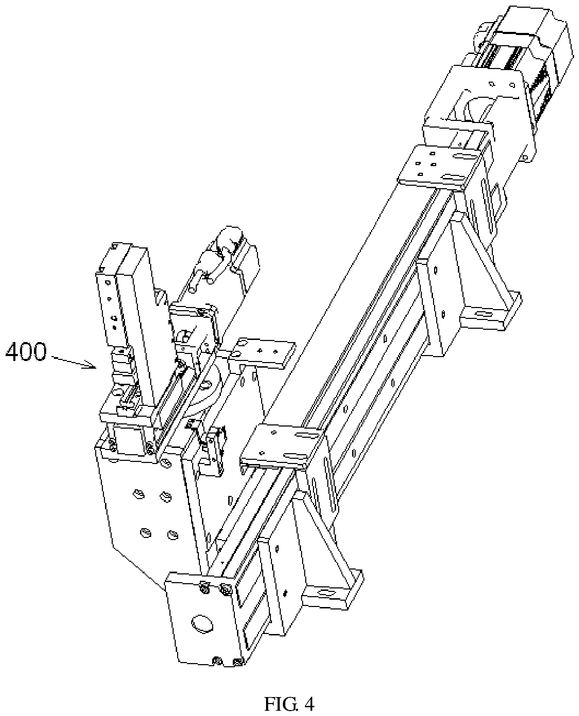

Fig.4 is a schematic perspective view of a fiber carrying mechanism 400 of an automatic fiber cleaning system according to the claimed invention.

As shown in the embodiment of Fig.4, the automatic fiber cleaning system may further comprise a fiber carrying mechanism 400. The fiber carrying mechanism 400 is adapted to place the optical fiber 22 to be cleaned on the second cleaning belt located right above the second pressing tool 260 and to move the cleaned optical fiber 22 out of the second pressing tool 260.

In an embodiment, as shown in Fig.4, the fiber carrying mechanism 400 comprises a carrier movable in a first direction, a second direction and a third direction which are perpendicular to each other. The optical fiber 22 may be held and fixed in a clamp of the fiber carrying mechanism 400. However, the present disclosure is not limited to the illustrated embodiment, the fiber carrying mechanism 400 may also comprise a manipulator or a robot which is adapted to hold and move the optical fiber 22.

In an embodiment, the optical fiber 22 is kept stationary by the fiber carrying mechanism 400 during wiping the optical fiber 22 with the first cleaning belt and the second cleaning belt.

In the above embodiments, the first cleaning belt and the second cleaning belt may be a clean woven belt or any other suitable cleaning belts.

Next, an automatic fiber cleaning method according to the claimed invention will be explained in detail with reference to Figs.1 to 4. The automatic fiber cleaning method mainly comprises steps of:
moving upward the first mounting plate 100 to separate the first pressing tool 160 and the second pressing tool 260, so as to separate the first tightened cleaning belt and the second tightened cleaning belt;
fixing an optical cable 20 to be cleaned on the fiber carrying mechanism 400;
placing the optical fiber 22 to be cleaned on the second cleaning belt located right above the second pressing tool 260 by the fiber carrying mechanism 400;
driving the first mounting plate 100 to move downward so as to clamp the optical fiber 22 to be cleaned between the first tightened cleaning belt and the second tightened cleaning belt;
switching on the sprayer 300 to spray the cleaning agent onto the first tightened cleaning belt and the second tightened cleaning belt;
driving the first cleaning belt and the second cleaning belt to move so as to wipe the optical fiber 22 with the first wet cleaning belt and the second wet cleaning belt having the cleaning agent;
switching off the sprayer 300 to stop supplying the cleaning agent onto the first tightened cleaning belt and the second tightened cleaning belt;
moving upward the first mounting plate 100 to separate the first tightened cleaning belt from the second tightened cleaning belt; and
removing the cleaned optical fiber 22 by the fiber carrying mechanism 400.

In an embodiment, the automatic fiber cleaning method may further comprise: after switching off the sprayer 300, wiping continuously the optical fiber 22 with the first dry cleaning belt and the second dry cleaning belt without the cleaning agent for a predetermined period.

In an embodiment, the optical fiber 22 is kept stationary by the fiber carrying mechanism 400 during wiping the optical fiber 22 with the first cleaning belt and the second cleaning belt.

In the above embodiments, the cleaned optical fibers comprise a plurality of bare fibers 22 of a ribbon cable 20, however, the present disclosure is not limited thereto, the cleaned optical fibers may also comprise a single fiber of round cable.

Though the present invention is described with reference to the accompanying drawings, the disclosed embodiments with reference to the drawings intend to make an exemplary illustration to the implementations of the present invention, but cannot be interpreted as a limitation to the present invention.

It should be noted that, the term "comprising", "comprise", "including" and "include" should be understood as not excluding other elements or steps, the word "a" or "an" should be understood as not excluding plural of said elements or steps. In addition, any reference number in the claims should not be understood as limiting the scope of the present invention.

## Claims

1. An automatic fiber cleaning system, comprising:
a first mounting plate (100) and a second mounting plate (200) arranged to be movable relative to each other;
a first cleaning module mounted on the first mounting plate, comprising:
a first cleaning belt;
a first driven belt wheel (120) on which an unused portion of the first cleaning belt is wound;
a first driving belt wheel (110) on which a used portion of the first cleaning belt is wound; and
a first pressing tool (160) on which the first cleaning belt is tightened;
a second cleaning module mounted on the second mounting plate, comprising:
a second cleaning belt;
a second driven belt wheel (220) on which an unused portion of the second cleaning belt is wound;
a second driving belt wheel (210) on which a used portion of the second cleaning belt is wound; and
a second pressing tool (260) on which the second cleaning belt is tightened; and
a sprayer (300) configured to spray a cleaning agent onto the first cleaning belt and the second cleaning belt tightened on the first pressing tool and the second pressing tool,
wherein the first pressing tool and the second pressing tool are cooperated with each other to press the first cleaning belt and the second cleaning belt on both sides of an optical fiber (22) to be cleaned, respectively, so that the optical fiber to be cleaned is clamped between the first cleaning belt and the second cleaning belt, and
wherein the first cleaning belt and the second cleaning belt are driven to move relative to the optical fiber by the first driving belt wheel and the second driving belt wheel, so as to wipe the optical fiber.

2. The automatic fiber cleaning system according to claim 1, wherein
the first cleaning module further comprises a first sensor (170) adapted to detect whether the first cleaning belt has been used out; and
the second cleaning module further comprises a second sensor (270) adapted to detect whether the second cleaning belt has been used out.

3. The automatic fiber cleaning system according to claim 2, wherein
the first cleaning module further comprises a pair of first rollers (130, 140) which are located at two sides of the first pressing tool (160), the first cleaning belt being tightened on the pair of first rollers and the first pressing tool; and
the second cleaning module further comprises a pair of second rollers (230, 240) which are located at two sides of the second pressing tool (260), the second cleaning belt being tightened on the pair of second rollers and the second pressing tool.

4. The automatic fiber cleaning system according to claim 3, wherein
the first cleaning module further comprises a first tightening roller (150) adapted to adjust a tension of the first cleaning belt; and
the second cleaning module further comprises a second tightening roller (250) adapted to adjust a tension of the second cleaning belt.

5. The automatic fiber cleaning system according to claim 4, wherein
the first pressing tool and the second pressing tool are movable relative to each other so as to loose or clamp the optical fiber (22).

6. The automatic fiber cleaning system according to claim 5, wherein
the first mounting plate (100) and the second mounting plate (200) are movably mounted on the same vertical stationary baseplate (1000); and
the first mounting plate is located right above the second mounting plate.

7. The automatic fiber cleaning system according to claim 6, wherein
a rail extending vertically is arranged on the stationary baseplate (1000);
a first slider is arranged on the first mounting plate and slidably engaged with the rail so as to move upward and downward along the rail; and
a second slider is arranged on the second mounting plate and slidably engaged with the rail so as to move upward and downward along the rail.

8. The automatic fiber cleaning system according to claim 7, wherein the sprayer is mounted on the first mounting plate.

9. The automatic fiber cleaning system according to claim 8, further comprising:
a fiber carrying mechanism adapted to place the optical fiber (22) to be cleaned on the second pressing tool and to move the cleaned optical fiber (22) out of the second pressing tool.

10. The automatic fiber cleaning system according to claim 9, further comprising:
a plate driving mechanism adapted to drive the first mounting plate to move so as to allow the first pressing tool mounted on the first mounting plate to be movable relative to the second pressing tool mounted on the second mounting plate.

11. An automatic fiber cleaning method using an automatic fiber cleaning system according to any one of claims 1 to 10, comprising:
clamping an optical fiber (22) to be cleaned between a first tightened cleaning belt and a second tightened cleaning belt;
switching on a sprayer (300) to spray a cleaning agent onto the first tightened cleaning belt and the second tightened cleaning belt;
driving the first cleaning belt and the second cleaning belt to move so as to wipe the optical fiber with the first wet cleaning belt and the second wet cleaning belt having the cleaning agent;
switching off the sprayer to stop supplying the cleaning agent onto the first tightened cleaning belt and the second tightened cleaning belt;
separating the first tightened cleaning belt from the second tightened cleaning belt; and
removing the cleaned optical fiber.

12. The automatic fiber cleaning method according to claim 11, further comprising:
after switching off the sprayer, wiping continuously the optical fiber (22) with the first dry cleaning belt and the second dry cleaning belt without the cleaning agent for a predetermined period.

13. The automatic fiber cleaning method according to claim 11, wherein,
the optical fiber (22) is kept stationary during wiping the optical fiber with the first cleaning belt and the second cleaning belt.

## Patentansprüche

1. Ein automatisches Faserreinigungssystem, umfassend:
eine erste Montageplatte (100) und eine zweite Montageplatte (200), die relativ zueinander beweglich angeordnet sind;
ein erstes Reinigungsmodul, das auf der ersten Montageplatte montiert ist und Folgendes umfasst:
ein erstes Reinigungsband;
ein erstes angetriebenes Bandrad (120), auf das ein unverwendeter Teil des ersten Reinigungsbandes aufgewickelt ist;
ein erstes Antriebsbandrad (110), auf dem ein verwendeter Teil des ersten Reinigungsbandes aufgewickelt ist; und
ein erstes Presswerkzeug (160), auf dem das erste Reinigungsband gespannt ist;
ein zweites Reinigungsmodul, das auf der zweiten Montageplatte montiert ist, umfassend:
ein zweites Reinigungsband;
ein zweites angetriebenes Bandrad (220), auf das ein nicht verwendeter Teil des zweiten Reinigungsbandes aufgewickelt ist;
ein zweites Antriebsbandrad (210), auf das ein verwendeter Teil des zweiten Reinigungsbandes aufgewickelt ist; und
ein zweites Presswerkzeug (260), an dem das zweite Reinigungsband gespannt ist; und
ein Zerstäuber (300), der konfiguriert ist, ein Reinigungsmittel auf das erste Reinigungsband und das zweite Reinigungsband zu sprühen, und der auf das erste Presswerkzeug und das zweite Presswerkzeug gespannt ist,
wobei das erste Presswerkzeug und das zweite Presswerkzeug miteinander zusammenwirken, um das erste Reinigungsband und das zweite Reinigungsband jeweils auf beide Seiten einer zu reinigenden optischen Faser (22) zu pressen, so dass die zu reinigende optische Faser zwischen dem ersten Reinigungsband und dem zweiten Reinigungsband eingeklemmt wird, und
wobei das erste Reinigungsband und das zweite Reinigungsband durch das erste Antriebsbandrad und das zweite Antriebsbandrad so angetrieben werden, dass sie sich relativ zu der optischen Faser bewegen, um die optische Faser zu wischen.

2. Das automatische Faserreinigungssystem nach Anspruch 1, wobei
das erste Reinigungsmodul ferner einen ersten Sensor (170) umfasst, der angepasst ist, zu erkennen, ob das erste Reinigungsband verbraucht wurde; und
das zweite Reinigungsmodul ferner einen zweiten Sensor (270) umfasst, der angepasst ist, zu erkennen, ob das zweite Reinigungsband verbraucht ist.

3. Das automatische Faserreinigungssystem nach Anspruch 2, wobei
das erste Reinigungsmodul ferner ein Paar erster Rollen (130, 140) umfasst, die an zwei Seiten des ersten Presswerkzeugs (160) angeordnet sind, wobei das erste Reinigungsband auf dem Paar erster Rollen und dem ersten Presswerkzeug gespannt ist; und
das zweite Reinigungsmodul ferner ein Paar zweiter Rollen (230, 240) umfasst, die an zwei Seiten des zweiten Presswerkzeugs (260) angeordnet sind, wobei das zweite Reinigungsband auf das Paar zweiter Rollen und das zweite Presswerkzeug gespannt wird.

4. Das automatische Faserreinigungssystem nach Anspruch 3, wobei
das erste Reinigungsmodul ferner eine erste Spannrolle (150) umfasst, die angepasst ist, eine Spannung des ersten Reinigungsbandes einzustellen; und
das zweite Reinigungsmodul ferner eine zweite Spannrolle (250) umfasst, die angepasst ist, eine Spannung des zweiten Reinigungsbandes einzustellen.

5. Das automatische Faserreinigungssystem nach Anspruch 4, wobei
das erste Presswerkzeug und das zweite Presswerkzeug relativ zueinander beweglich sind, um die optische Faser (22) zu lösen oder einzuklemmen.

6. Das automatische Faserreinigungssystem nach Anspruch 5, wobei
die erste Montageplatte (100) und die zweite Montageplatte (200) beweglich auf derselben vertikal feststehenden Grundplatte (1000) angebracht sind; und
die erste Montageplatte befindet sich direkt über der zweiten Montageplatte.

7. Das automatische Faserreinigungssystem nach Anspruch 6, wobei
auf der feststehenden Grundplatte (1000) eine vertikal verlaufende Schiene angeordnet ist;
ein erster auf der ersten Montageplatte angeordneter Gleiter, der gleitend mit der Schiene in Eingriff steht um sich entlang der Schiene aufwärts und abwärts zu bewegen; und
ein zweiter auf der zweiten Montageplatte angeordneter Gleiter, der gleitend mit der Schiene in Eingriff steht, um sich entlang der Schiene aufwärts und abwärts zu bewegen.

8. Automatisches Faserreinigungssystem nach Anspruch 7, wobei der Zerstäuber auf der ersten Montageplatte montiert ist.

9. Automatisches Faserreinigungssystem nach Anspruch 8, ferner umfassend:
einen Fasertransportmechanismus angepasst die zu reinigende optische Faser (22) auf dem zweiten Presswerkzeug zu platzieren und die gereinigte optische Faser (22) aus dem zweiten Presswerkzeug heraus zu bewegen.

10. Automatisches Faserreinigungssystem nach Anspruch 9, ferner umfassend:
einen Plattenantriebsmechanismus angepasst die erste Montageplatte so zu bewegen, dass das auf der ersten Montageplatte montierte erste Presswerkzeug relativ zu dem auf der zweiten Montageplatte montierten zweiten Presswerkzeug bewegt werden kann.

11. Automatisches Faserreinigungsverfahren unter Verwendung eines automatischen Faserreinigungssystems nach einem der Ansprüche 1 bis 10, umfassend:
Einspannen einer zu reinigenden optischen Faser (22) zwischen einem ersten gespannten Reinigungsband und einem zweiten gespannten Reinigungsband;
Einschalten eines Zerstäubers (300) zum Aufsprühen eines Reinigungsmittels auf das erste gespannte Reinigungsband und das zweite gespannte Reinigungsband;
Antrieben des ersten Reinigungsbandes und des zweiten Reinigungsbandes zur Bewegung, um die optische Faser mit dem ersten Nassreinigungsband und dem zweiten Nassreinigungsband mit dem Reinigungsmittel abzuwischen;
Ausschalten des Zerstäubers, um die Zufuhr des Reinigungsmittels auf das erste gespannte Reinigungsband und das zweite gespannte Reinigungsband zu stoppen;
Trennen des ersten gespannten Reinigungsbandes von dem zweiten gespannten Reinigungsband; und
Entfernen der gereinigten optischen Faser.

12. Automatische Faserreinigungsverfahren nach Anspruch 11 ferner umfassend:
nach dem Abschalten des Zerstäubers kontinuierliches Abwischen der optischen Faser (22) ohne das Reinigungsmittel für eine vorbestimmte Zeit mit dem ersten Trockenreinigungsband und dem zweiten Trockenreinigungsband.

13. Automatisches Faserreinigungsverfahren nach Anspruch 11, wobei
die optische Faser (22) während des Wischens der optischen Faser mit dem ersten Reinigungsband und dem zweiten Reinigungsband stationär gehalten wird.

## Revendications

1. Système de nettoyage automatique de fibres optiques comprenant :
une première plaque de montage (100) et une seconde plaque de montage (200) disposées pour être mobiles l'une par rapport à l'autre,
un premier module de nettoyage monté sur la première plaque de montage, comprenant :
une première courroie de nettoyage,
une première roue entraînée par courroie (120) sur laquelle est bobinée une partie inutilisée de la première courroie de nettoyage,
une première roue d'entraînement de courroie (110) sur laquelle est bobinée une partie utilisée de la première courroie de nettoyage, et
un premier outil de pressage (160) sur lequel est tendue la première courroie de nettoyage,
un second module de nettoyage monté sur la seconde plaque de montage, comprenant :
une seconde courroie de nettoyage,
une seconde roue entraînée par courroie (220) sur laquelle est bobinée une partie inutilisée de la seconde courroie de nettoyage,
une seconde roue d'entraînement de courroie (210) sur laquelle est bobinée une partie utilisée de la seconde courroie de nettoyage, et
un second outil de pressage (160) sur lequel est tendue la seconde courroie de nettoyage, et
un vaporisateur (300) configuré pour vaporiser un agent nettoyant sur la première courroie de nettoyage et sur la seconde courroie de nettoyage tendues sur le premier outil de pressage et sur le second outil de pressage,
dans lequel le premier outil de pressage et le second outil de pressage collaborent respectivement l'un avec l'autre pour presser la première courroie de nettoyage et la seconde courroie de nettoyage sur les deux côtés d'une fibre optique (22) à nettoyer, de sorte à ce que la fibre optique à nettoyer soit bloquée entre la première courroie de nettoyage et la seconde courroie de nettoyage, et
dans lequel la première courroie de nettoyage et la seconde courroie de nettoyage sont entraînées pour se déplacer par rapport à la fibre optique grâce à la première roue d'entraînement de courroie et à la seconde roue d'entraînement de courroie, de sorte à nettoyer la fibre optique.

2. Système de nettoyage automatique de fibres selon la revendication 1, dans lequel :
le premier module de nettoyage comprend en outre un premier capteur (170) conçu pour détecter si la première courroie de nettoyage a été usée, et
le second module de nettoyage comprend en outre un second capteur (270) conçu pour détecter si la seconde courroie de nettoyage a été usée.

3. Système de nettoyage automatique de fibres selon la revendication 2, dans lequel :
le premier module de nettoyage comprend en outre une paire de premiers galets (130, 140) qui sont situés sur deux côtés du premier outil de pressage (160), la première courroie de nettoyage étant tendue sur la paire de premiers galets et sur le premier outil de pressage, et
le second module de nettoyage comprend en outre une paire de seconds galets (230, 240) qui sont situés sur deux côtés du second outil de pressage (260), la seconde courroie de nettoyage étant tendue sur la paire de seconds galets et sur le second outil de pressage.

4. Système de nettoyage automatique de fibres selon la revendication 3, dans lequel :
le premier module de nettoyage comprend en outre un premier galet tendeur (150) conçu pour ajuster la tension de la première courroie de nettoyage, et
le second module de nettoyage comprend en outre un second galet tendeur (250) conçu pour ajuster la tension de la seconde courroie de nettoyage.

5. Système de nettoyage automatique de fibres selon la revendication 4, dans lequel :
le premier outil de pressage et le second outil de pressage sont mobiles l'un par rapport à l'autre de sorte à relâcher ou resserrer la fibre optique (22).

6. Système de nettoyage automatique de fibres selon la revendication 5, dans lequel :
la première plaque de montage (100) et la seconde plaque de montage (200) sont montées mobiles sur la même platine fixe verticale (1000), et
la première plaque de comptage est située juste au-dessus de la seconde plaque de montage.

7. Système de nettoyage automatique de fibres selon la revendication 6, dans lequel :
un rail se déployant verticalement est disposé sur la platine fixe (1000),
une première glissière est disposée sur la première plaque de montage et en prise tout en pouvant coulisser avec le rail de sorte à se déplacer vers le haut et vers le bas le long du rail, et
une seconde glissière est disposée sur la seconde plaque de montage et en prise tout en pouvant coulisser avec le rail de sorte à se déplacer vers le haut et vers le bas le long du rail.

8. Système de nettoyage automatique de fibres selon la revendication 7, dans lequel le vaporisateur est monté sur la première plaque de montage.

9. Système de nettoyage automatique de fibres selon la revendication 8, comprenant en outre :
un mécanisme de transport de fibres conçu pour placer la fibre optique (22) à nettoyer sur le second outil de pressage et pour déplacer la fibre optique (22) nettoyée en dehors du second outil de pressage.

10. Système de nettoyage automatique de fibres selon la revendication 9, comprenant en outre :
un mécanisme d'entraînement de plaque conçu pour entraîner la première plaque de montage à se déplacer de sorte à autoriser la mobilité du premier outil de pressage, monté sur la première plaque de montage, par rapport au second outil de pressage monté sur la seconde plaque de montage.

11. Procédé de nettoyage automatique de fibres utilisant un système de nettoyage automatique de fibres conformes à l'une quelconque des revendications 1 à 10, comprenant :
le serrage d'une fibre optique (22) à nettoyer entre une première courroie de nettoyage tendue et une seconde courroie de nettoyage tendue,
le basculement sur un vaporisateur (300) dans le but de vaporiser un agent nettoyant sur la première courroie de nettoyage tendue et sur la seconde courroie de nettoyage tendue,
l'entraînement de la première courroie de nettoyage et de la seconde courroie de nettoyage de sorte à les déplacer pour nettoyer la fibre optique en utilisant la première courroie de nettoyage humide et la seconde courroie de nettoyage humide comportant l'agent nettoyant,
l'arrêt du vaporisateur afin de stopper la délivrance de l'agent nettoyant sur la première courroie de nettoyage tendue et sur la seconde courroie de nettoyage tendue,
la séparation de la première courroie de nettoyage tendue de la seconde courroie de nettoyage tendue, et
l'enlèvement de la fibre optique nettoyée.

12. Procédé de nettoyage automatique de fibres selon la revendication 11, comprenant en outre :
après l'arrêt du vaporisateur, le nettoyage continu de la fibre optique (22) avec la première courroie de nettoyage sèche et la seconde courroie de nettoyage sèche sans agent nettoyant pendant une période prédéterminée.

13. Procédé de nettoyage automatique de fibres selon la revendication 11, dans lequel :
la fibre optique (22) est maintenue fixe pendant le nettoyage de la fibre optique avec la première courroie de nettoyage et la seconde courroie de nettoyage.
